# FASCICULE DE BREVET EUROPEEN

(11) **EP 3 935 934 B1**
(45) Date de publication et mention de la délivrance du brevet: **03.09.2025**
(21) Numéro de dépôt: 21183141.7
(22) Date de dépôt: 01.07.2021
(51) Int. Cl.: A01D 43/10, A01D 34/66, A01D 57/20, A01D 57/30

(54) **DISPOSITIF AGRICOLE AVEC UNE BARRE DE COUPE ET UN COLLECTEUR AMOVIBLE ET MACHINE AGRICOLE COMPORTANT UN TEL DISPOSITIF**
LANDWIRTSCHAFTLICHES GERÄT MIT EINEM MÄHBALKEN UND EINEM ABNEHMBAREN KOLLEKTOR UND LANDWIRTSCHAFTLICHE MASCHINE MIT EINEM SOLCHEN GERÄT
AGRICULTURAL DEVICE WITH A CUTTER BAR AND A REMOVABLE COLLECTING DEVICE AND AGRICULTURAL MACHINE COMPRISING SUCH A DEVICE

(30) Priorité: 06.07.2020 FR 2007140
(43) Date de publication de la demande: 12.01.2022
(73) Titulaire: Kuhn SAS, 67700 Saverne (FR)
(72) Inventeur: BILLARD, Sylvain, 67440 REINHARDSMUNSTER (FR)
(74) Mandataire: Hager, Esther Evelyne

(56) Documents cités:
- EP-A1- 1 155 609
- FR-A1- 3 080 738
- GB-A- 2 088 684

## Description

La présente invention se rapporte au domaine technique général du machinisme agricole. Elle concerne un dispositif agricole, plus particulièrement un dispositif pour la fenaison, pouvant être déplacé dans une direction d'avance et comportant une barre de coupe munie d'organes de coupes destinés à couper un produit végétal sur pied. Le dispositif comporte également un conditionneur disposé derrière la barre, et un groupeur destiné à déplacer le produit transversalement à la direction d'avance et situé, dans une position active, derrière la barre. Un actionneur d'escamotage est configuré pour transposer le groupeur entre la position active et une position passive dans laquelle le produit est déposé à l'arrière du dispositif. L'invention concerne également une machine agricole équipée d'un tel dispositif, ainsi qu'un procédé pour accéder entre un conditionneur et un groupeur appartenant à un tel dispositif.

Par le document FR 3 080 738 A1, qui est incorporé par référence dans la présente demande, on connaît un dispositif tel que décrit ci-dessus, dont le conditionneur est disposé derrière la barre de manière à travailler le produit que la barre vient de sectionner avant qu'il ne tombe au sol. Ceci étant, il arrive que du produit ne soit pas correctement entrainé par le conditionneur. Une partie du produit se retrouve alors à l'arrière du dispositif, à l'écart de l'andain formé par le groupeur. Par la suite, la totalité du produit n'est pas ramassée par la machine de récolte. Avec le temps, ce produit résiduel restant sur le sol peut détériorer le couvert végétal, réduisant son rendement.

Le document GB 2 088 684 A divulgue également un dispositif tel que décrit dans le paragraphe [0001]. Sur ce dispositif, une auge entoure le groupeur, s'étendant ainsi également en dessous et quelque peu plus avant que celui-ci. Ceci étant, du produit peut également chuter au sol sous le conditionneur et entre le conditionneur et l'avant de ladite auge. Avec un tel dispositif, une partie du produit peut ainsi aussi rester sur le sol et détériorer le couvert végétal, réduisant le rendement du dispositif.

Il est par ailleurs connu du document WO16162862 de disposer un collecteur entre la barre et le groupeur. Le collecteur s'étend sous le conditionneur afin d'empêcher la chute de produit sur le sol entre la barre et le groupeur. Le collecteur permet d'éviter des retombées de produit sur le sol. D'une part cette retombée de produit peut impliquer une perte du produit puisque celui-ci risque de ne pas être ramassé avec la machine de ramassage, diminuant ainsi la qualité de travail de la machine. D'autre part, cette retombée peut également provoquer un étouffement du produit végétal sur pied, pouvant diminuer le rendement de la récolte future. Avec le dispositif du WO16162862, des débris, comme des cailloux et/ou de la terre passés par-dessus la barre de coupe, peuvent se retrouver sur le collecteur. L'accumulation de débris et/ou de produit forme des amas sur la surface supérieure du collecteur, amas qui provoquent des frottements avec les pièces en mouvement, comme par exemple les organes de coupe et le conditionneur, voire leur blocage. Ralentir les pièces en mouvement induit une perte de qualité du travail et/ou nécessite une puissance supérieure pour entrainer le dispositif. Plus grave, le blocage des pièces en mouvement peut induire un arrêt prolongé du chantier agricole, voire un endommagement du dispositif et donc des opérations d'entretien et de réparation. De plus, certains amas peuvent se détacher subitement du collecteur et être projetés devant la barre de coupe. De telles projections couchent le produit sur pied qui n'est alors pas coupé, ou mal, dégradant la qualité de travail. En outre, certains débris se retrouvent finalement avec le produit déposé au sol, altérant la qualité du produit.

Afin d'éviter les problèmes susmentionnés, il est préconisé d'intervenir régulièrement sur le collecteur, notamment afin de réaliser son nettoyage pour le débarrasser des débris susmentionnés. Particulièrement lorsque le produit est humide, plusieurs nettoyages dans une même journée peuvent être nécessaires pour éviter les inconvénients précités. Intervenir sur le collecteur induit nécessairement d'y accéder. Avec le dispositif du document WO16162862A1, l'accès au collecteur est difficile car il nécessite de passer à travers la barre de coupe et/ou le groupeur, rendant le nettoyage du collecteur, respectivement de sa surface supérieure, fastidieux et ardu. En outre, passer à travers la barre, le groupeur et/ou le conditionneur entraine des risques de blessures, ce qui dissuade d'effectuer le nettoyage du collecteur.

La présente invention a pour but de pallier au moins les principaux inconvénients précités. Elle a notamment pour but de proposer un nouveau dispositif dont l'accès au collecteur est facilité, une nouvelle machine comportant un tel dispositif, ainsi qu'un procédé pour accéder entre le conditionneur et le groupeur d'un tel dispositif, permettant de favoriser un nettoyage régulier et sans danger.

L'invention est définie par l'objet de la revendication 1. D'autres modes de réalisations avantageux sont définis dans les revendications dépendantes.

En outre, un procédé selon la revendication 14 est également proposé.

A cet effet, une importante caractéristique de l'invention consiste en ce que le dispositif comporte un collecteur qui s'étend partiellement sous et partiellement derrière le conditionneur en position active du groupeur, et en ce qu'une partie mobile du collecteur est fixée sur ledit groupeur. De plus, dans la position active, le collecteur et la barre de coupe du dispositif sont contigus.

Du fait qu'au moins la partie du collecteur située à l'arrière du conditionneur est fixée avec le groupeur, un espace est libéré à l'arrière du conditionneur lorsque le groupeur est dans la position passive, offrant un accès direct et donc facilité au collecteur, respectivement à sa surface supérieure, tout en empêchant, dans la position active, que du produit soit déposé à l'écart de l'andain formé par le groupeur, permettant ainsi d'éviter une baisse de rendement. Toute intervention sur le collecteur, respectivement sa surface supérieure, est ainsi facilitée et plus rapide. Particulièrement, le nettoyage du collecteur est réalisé sans passer par la barre de coupe et/ou le groupeur, présentant moins de risque de blessure. Le tapis végétal étant exempt de produit non ramassé, la qualité de coupe est améliorée. Enfin, le fait de débarrasser ou nettoyer le collecteur permet d'alléger le dispositif, et de diminuer la puissance nécessaire à son fonctionnement.

L'invention sera mieux comprise à la lecture de la description ci-après, d'où ressortiront d'autres avantages, avec référence aux dessins schématiques donnés à titre d'exemple, dans lesquels :

### Brève description des dessins

[Fig. 1] représente une vue de dessus d'un dispositif selon l'invention faisant partie d'une machine attelée à un tracteur, en configuration travail du dispositif et en position active du groupeur, le collecteur étant représenté en pointillés.
[Fig. 2] représente une vue latérale en coupe d'un dispositif selon l'invention en configuration travail et dans la position active du groupeur et suivant une première variante de réalisation dans laquelle la partie mobile du collecteur s'étend sensiblement jusqu'à la barre de coupe, le groupeur et le collecteur étant également représentés en pointillés dans la position passive.
[Fig. 3] représente une vue latérale en coupe d'un dispositif selon l'invention, en configuration travail et dans la position active du groupeur, suivant un mode de réalisation préféré.
[Fig. 4] représente une vue latérale en coupe d'un dispositif selon l'invention, en configuration travail et dans la position passive du groupeur, suivant le mode de réalisation de la figure 3.
[Fig. 5] représente une vue de dessus d'une machine équipée d'un dispositif selon l'invention, en configuration transport.
[Fig. 6] représente une vue latérale en coupe d'un dispositif selon l'invention, en configuration travail et dans la position active du groupeur, suivant un mode de réalisation dans lequel le conditionneur est réalisé par deux tambours dont les moyens de conditionnements son interpénétrants.

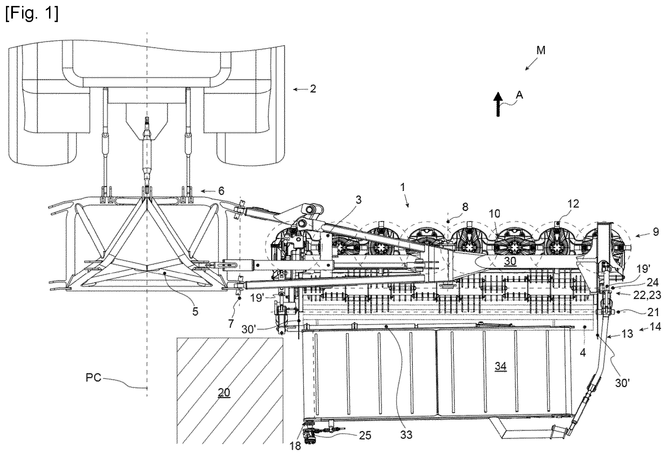

Ainsi qu'il ressort de la figure 1, la présente invention concerne un dispositif 1 agricole pouvant être déplacé dans une direction d'avance A et comportant une barre 9 de coupe munie d'organes de coupe destinés à couper un produit végétal sur pied, un conditionneur 22 disposé derrière la barre 9, et un groupeur 14 destiné à déplacer le produit transversalement à la direction d'avance A et situé, dans une position active, derrière la barre 9, un actionneur d'escamotage 19 étant configuré pour transposer le groupeur 14 entre la position active et une position passive dans laquelle le produit est déposé à l'arrière du dispositif 1.

Le dispositif 1 selon l'invention est un dispositif 1 agricole, plus particulièrement pour la fenaison. Le dispositif 1 fait partie d'une machine M. Il est apte à être entrainé par un tracteur 2 ou un véhicule analogue. La machine M comporte au moins une poutre 3 reliant le dispositif 1 à un bâti 5 de la machine M. La machine M est reliée au tracteur 2 par un cadre d'attelage 6 solidaire et/ou faisant partie du bâti 5. Dans une variante non représentée, le dispositif 1 fait partie d'une machine automotrice. Le dispositif 1 peut être déplacé dans une direction d'avance A, de préférence par le tracteur 2 ou par la machine automotrice. La direction d'avance A est représenté par une flèche sur les figures.

Un plan central PC passe par le centre du cadre d'attelage 6 et/ou du tracteur 2, ou, le cas échéant, de la machine automotrice. Le plan central PC est parallèle à la direction d'avance A. Le plan central PC est orienté verticalement et/ou perpendiculairement à l'axe des tourillons inférieurs du cadre d'attelage 6. Le tracteur 2 et/ou la machine M, respectivement son cadre d'attelage 6, est sensiblement symétrique par rapport au plan central PC.

Dans le document présent, les notions « latéral », « avant », « arrière », « devant » et « derrière » sont définies en regardant dans la direction d'avance A. La dimension « largeur » est à considérer perpendiculairement à la direction d'avance A et/ou au plan central PC. En outre dans ce document, à moins d'une indication contraire, toute orientation est à considérer lorsque le dispositif 1 est en configuration travail. Afin d'éviter des répétitions inutiles, « position active » désigne implicitement la position active du groupeur 14. De la même manière, « position passive » fait référence à la position passive du groupeur 14.

Ainsi que représenté sur la figure 1, le dispositif 1 comporte au moins une barre 9 de coupe munie d'organes de coupe destinés à couper un produit végétal sur pied. Le dispositif 1 comporte au moins un conditionneur 22 disposé derrière la barre 9, et au moins un groupeur 14 destiné à déplacer le produit transversalement à la direction d'avance A et situé, dans une position active, derrière la barre 9. Le dispositif 1 comporte en outre un actionneur d'escamotage 19 configuré pour transposer le groupeur 14 entre la position active et une position passive dans laquelle le produit est déposé à l'arrière du dispositif 1. La barre 9 transmet le produit, de préférence directement, au conditionneur 22 qui transmet le produit, de préférence directement, au groupeur 14 lorsque celui-ci est en position active.

Tel que représenté sur les figures, un organe de coupe est par exemple un rotor 10. Les rotors 10 sont montés sur la barre 9 à intervalles plus ou moins réguliers. Ils sont pivotés à rotation rapide, préférentiellement par un train de pignons incorporés dans un carter contenant du lubrifiant. Chaque organe de coupe, respectivement rotor 10, est entrainé en rotation autour d'un axe de rotation 11 respectif, préférentiellement sensiblement vertical et/ou légèrement incliné vers l'avant. Les axes de rotation 11 des rotors 10 d'une même barre 9 sont alignés et contenus dans un même plan, préférentiellement perpendiculaire à la direction d'avance A. Selon une alternative non représentée, les axes de rotation 11 de la barre 9 de coupe ne sont pas alignés. Un châssis 30 relie la barre 9 à la poutre 3 de la machine M. Le châssis 30 comprend un flasque latéral 30' à chacune de ses extrémités latérales.

Chaque rotor 10 comprend des lames 12 destinées à sectionner le produit sur pied. Le produit sur pied est une plante herbacée ou non ligneuse comme par exemple de l'herbe, une céréale ou tout végétal à tige. Lorsque le produit est spécifié « sur pied », il n'a pas encore été coupé par la barre 9. Sinon, « produit » désigne le produit préalablement fauché par la barre 9. Les extrémités libres des rotors 10 décrivent une trajectoire circulaire, préférentiellement chevauchant la ou les trajectoire(s) adjacente(s). Ces trajectoires sont contenues dans un plan de coupe C.

Une caractéristique importante du dispositif réside dans le fait qu'il comporte un collecteur 4 s'étendant partiellement sous le conditionneur 22 et partiellement derrière le conditionneur 22 en position active du groupeur 14. Plus précisément, en position active du groupeur 14, au moins les trois quarts du collecteur 4 sont situés sous l'axe du conditionneur 22. Le collecteur 4 récupère ainsi le produit chutant du conditionneur 22 lorsque ce dernier n'arrive pas à l'entrainer, et permet de maintenir propre le tapis végétal à l'arrière du dispositif 1, dans la position active. Le collecteur 4 assure qu'aucun produit n'est déposé à l'écart d'un andain 20 formé par le groupeur 14 dans la position active, améliorant la qualité de travail du dispositif 1. De plus, après ramassage, un tel dispositif 1 entraine moins de risque d'étouffement du tapis végétal, évitant de diminuer le rendement de la parcelle. Ainsi qu'il ressort des figures 1 à 3, en position active du groupeur 14, le collecteur 4 s'étend au moins partiellement en dessous du conditionneur 22 vu selon la direction d'avance A, et en vue latérale.

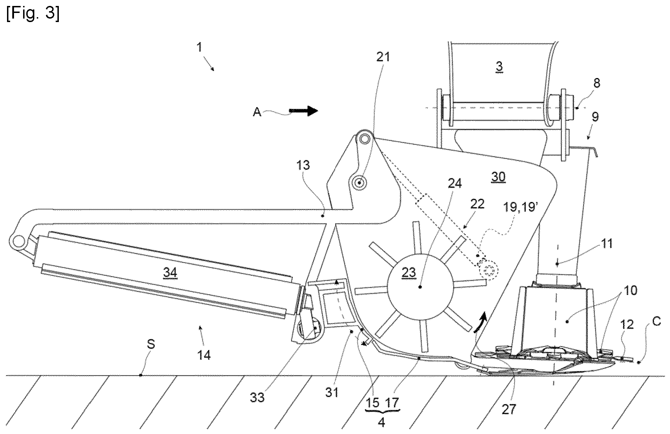

Le dispositif 1 est également caractérisé en ce qu'une partie mobile 15 du collecteur 4, située au moins partiellement derrière le conditionneur 22 en position active du groupeur 14, est fixée sur ledit groupeur 14. Grâce à cette fixation, un espace est ouvert derrière le conditionneur 22 dans la position passive, offrant un accès direct au collecteur 4, respectivement à une surface supérieure 16 du collecteur 4, facilitant et améliorant ainsi son nettoyage. Autrement dit, dans la position passive du groupeur 14, la partie arrière du conditionneur 22 est dégagée. L'accès au conditionneur 22 est, lui aussi, direct et donc facilité par la fixation de la partie mobile 15 avec le groupeur 14, dans la position passive. Ainsi qu'il ressort des figures 1 et 3, en position active du groupeur 14, la partie mobile 15 s'étend partiellement en dessous du conditionneur 22 en vue latérale.

Tel qu'il est visible sur la figure 1, en position active, le groupeur 14 est positionné derrière le conditionneur 22, de manière à recevoir le produit travaillé par ce dernier. En position active, le groupeur 14 est orienté sensiblement horizontalement. Dans cette position, il est entrainé afin de déplacer le produit transversalement à la direction d'avance A. Le produit est ainsi déposé en un andain 20 latéralement au dispositif 1, respectivement au groupeur 14. La position passive permet de déposer le produit en un andain plus large. On parle dans ce cas d'épandage du produit. En position passive, le groupeur 14 est soulevé, préférentiellement de manière à libérer totalement l'arrière du conditionneur 22. Dans la position passive, le groupeur 14 est orienté sensiblement verticalement. Dans cette position, le produit est déposé directement sur le sol S par le conditionneur 22 à l'arrière du dispositif 1.

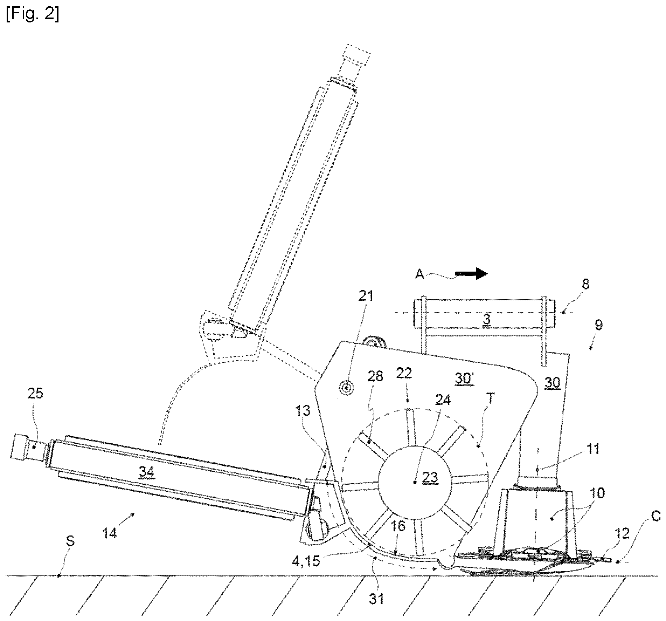

Tel qu'il ressort des figures 2 à 4 notamment, le groupeur 14 est transposé entre ses positions active et passive par l'actionneur d'escamotage 19 et par pivotement autour d'un axe d'escamotage 21. Au moins en configuration travail du dispositif 1, l'axe d'escamotage 21 est transversal, et de préférence perpendiculaire, à la direction d'avance A et/ou au plan central PC. Le pivotement permet de faire pivoter le groupeur 14 par rapport à la barre 9. L'axe d'escamotage 21 est horizontal. Dans la position active, il est situé à l'avant du groupeur 14 ce qui permet de libérer davantage d'espace derrière le conditionneur 22 dans la position passive. L'axe d'escamotage 21 est en outre situé au dessus du conditionneur 22, plus précisément au dessus de l'arrière du conditionneur 22, de sorte qu'un pivotement de 100° ou moins permette au groupeur 14 de libérer l'espace à l'arrière du conditionneur 22, et préférentiellement d'être au dessus du conditionneur 22, en position passive. Il découle également de cette disposition qu'en position passive, la partie mobile 15 du collecteur 4 est plus éloignée du conditionneur 22, et de préférence plus éloignée du sol S, qu'en position active. Le groupeur 14 et la partie mobile 15 du collecteur 4 ne perturbent ainsi pas le flux de produit provenant du conditionneur 22 dans la position passive.

Ainsi que représenté sur la figure 1, l'actionneur d'escamotage 19 est réalisé par deux vérins d'escamotage 19', de préférence actionnés depuis une cabine du tracteur 2. L'actionneur d'escamotage 19 permet de transposer le groupeur 14 entre positions active et passive facilement, sans descendre de la cabine. Chacun des vérins d'escamotage 19' est situé à une extrémité latérale du conditionneur 22, préférentiellement accolé à un flasque latéral 30', assurant le guidage en rotation conjoint du groupeur 14 et du collecteur 4 sans risque de déformation par torsion de ces derniers. Chaque vérin d'escamotage 19' est fixé d'une part au châssis 30, et d'autre part au groupeur 14, respectivement au cadre 13. Il ressort la présente description que l'actionnement de l'actionneur d'escamotage 19 permet de transposer le groupeur 14 entre les positions active et passive, de sorte à pouvoir accéder facilement, et de préférence directement, entre le conditionneur 22 et le groupeur 14.

Ainsi que représenté sur la figure 2, de manière à le rapprocher autant que possible de la barre 9, l'avant du conditionneur 22 est préférentiellement situé au dessus de la barre 9. Le conditionneur 22, respectivement le conditionnement du produit, est destiné à diminuer la période pendant laquelle le produit risque d'être endommagé par la pluie. En effet, le conditionneur 22 permet de réduire la durée globale du séchage du produit. Il permet également de synchroniser le séchage des tiges et des feuilles du produit.

Le conditionneur 22 comporte au moins un tambour 23, de préférence muni de moyens de conditionnement. Lors du fonctionnement du dispositif 1, le tambour 23 est entrainé autour d'un axe de rotation 24. L'axe de rotation 24 du tambour 23 est transversal à la direction d'avance A, et préférentiellement parallèlement à l'axe d'escamotage 21. Selon l'exemple de réalisation, le tambour 23 est guidé en rotation par rapport au châssis 30, préférentiellement à chacune de ses extrémités dans les flasques latéraux 30'. Afin de réduire le poids du dispositif 1, et ainsi qu'il ressort de la figure 1 notamment, la largeur du conditionneur 22 est légèrement inférieure à la largeur de la barre 9.

Le tambour 23 tourne de telle manière que son extrémité basse se déplace vers l'avant, dans le sens de rotation représenté par la flèche 27. Le conditionneur 22 permet ainsi de soulever le produit par-dessus l'axe de rotation 24 et de le déposer sur le groupeur 14. L'action des moyens de conditionnement du conditionneur 22, respectivement du tambour 23, lors de son entrainement, permet d'accélérer le séchage du produit.

Dans le mode de réalisation préféré, le conditionneur 22 comporte, un tambour 23 unique. Les moyens de conditionnement sont réalisés par des doigts 28, ou fléaux, répartis sur le tambour 23. Les doigts 28 s'étendent radialement à l'axe de rotation 24. Une telle réalisation permet de limiter le nombre d'éléments du conditionneur 22, et de simplifier ainsi le dispositif 1. Chaque doigt 28 peut être articulé avec le tambour 23 autour d'un axe parallèle à l'axe de rotation 24, de manière à éviter son endommagement lorsqu'il rencontre un obstacle tel qu'une pierre.

En rotation, le tambour 23, respectivement les extrémités extérieures des moyens de conditionnement, forme(nt) une trajectoire T extérieure autour de l'axe de rotation 24. Vue selon l'axe de rotation 24, la trajectoire T est un cercle.

La surface supérieure 16 est la surface orientée face au conditionneur 22 en position active. Vu selon l'axe de rotation 24 et dans la position active, le collecteur 4, respectivement la surface supérieure 16, épouse la trajectoire T, évitant toute accroche de produit et la formation d'amas importants sur le collecteur 4. Dans la position active, la distance entre le collecteur 4, respectivement la surface supérieure 16, et la trajectoire T est inférieure à 15%, de préférence inférieure à 10%, et plus préférentiellement encore inférieure à 7% du rayon de la trajectoire T.

Ainsi que représenté sur la figure 2, selon une première variante simple, le collecteur 4 comporte une partie mobile 15 qui s'étend partiellement sous et partiellement derrière le conditionneur 22 dans la position active, et préférentiellement depuis l'avant du groupeur 14 jusqu'à l'arrière de la barre 9. Dans cette première variante de réalisation, la partie mobile 15 et la barre 9 sont préférentiellement contiguës, sans intervalle. L'extrémité frontale du collecteur 4, respectivement de la partie fixe 17, est située de préférence sous le plan de coupe C dans la position active, et préférentiellement également plus bas que le conditionneur 22. Afin de récupérer efficacement le produit, la partie mobile 15 s'étend sensiblement sur toute la largeur du conditionneur 22, parallèlement à l'axe de rotation 24.

Dans cette première variante de réalisation, la partie mobile 15 couvre, dans la position active, un secteur angulaire 31 d'au moins le quart de la trajectoire T, vu selon l'axe de rotation 24. Une telle étendue de la partie mobile 15 permet, en position passive, de dégager une portion importante de la trajectoire T, et préférentiellement du dessous du conditionneur 22. Le groupeur 14 doit cependant être pivoté selon un angle supérieur à 100° pour que la partie mobile 15 ne perturbe pas, en position passive, le flux de produit provenant du conditionneur 22.

Le secteur angulaire 31 est situé à l'arrière du conditionneur 22, de sorte qu'il soit aisé d'accéder au conditionneur 22 en position passive, particulièrement lorsque le dispositif 1 est décollé du sol S, comme par exemple dans une position de manœuvre de la machine M. Le secteur angulaire 31 est en outre situé au moins partiellement sous l'axe de rotation 24, de manière à ce que la partie mobile 15 ne perturbe pas le flux de produit en position active. Dans la position passive, le secteur angulaire 31 est découvert. On entend par « couvrir le secteur angulaire 31 » que la partie mobile 15 est située à proximité de la trajectoire T. Dans cette première variante de réalisation, le collecteur 4 est formé uniquement par la partie mobile 15. La fixation de la partie mobile 15 sur le cadre 13 est préférentiellement réalisée par boulonnage, mais pourrait tout aussi bien être réalisée par soudure.

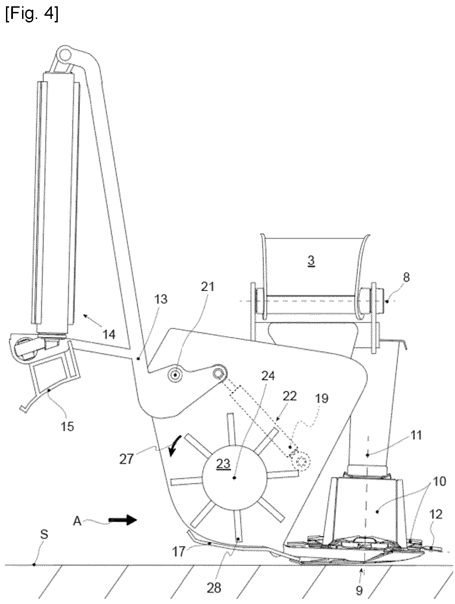

Selon le mode de réalisation préféré représentée sur les figures 3 et 4, le collecteur 4 comporte une partie mobile 15 située au moins partiellement derrière le conditionneur 22 en position active, et une partie fixe 17. Tel qu'il ressort de la figure 3, la partie mobile 15 peut également s'étendre partiellement sous le conditionneur 22. La partie fixe 17 est située au moins partiellement, et de préférence entièrement, sous le conditionneur 22. Elle est fixée avec la barre 9, respectivement avec le châssis 30, préférentiellement avec chacun des flasques latéraux 30', et préférentiellement par boulonnage. Dans cette variante préférée, la surface supérieure 16 est divisée entre les parties fixe 17 et mobile 15.

La partie mobile 15 s'étend ainsi, selon la direction d'avance A et en position active du groupeur 14, au moins partiellement entre la partie fixe 17 et le groupeur 14. La partie fixe 17 permet qu'en position passive du groupeur 14, le collecteur 4, respectivement la partie mobile 15, ne perturbe pas le flux de produit entre le conditionneur 22 et le sol S. Précisément, pour un pivotement du groupeur 14 selon un angle défini autour de l'axe d'escamotage 21, un collecteur 4 avec une partie mobile 15 permet de moins perturber le flux de produit provenant du conditionneur 22 en position passive du groupeur 14. On obtient ainsi un andain 20 plus uniforme, assurant un séchage plus rapide et plus homogène du produit. De plus, la longueur du dispositif 1, respectivement de la machine M, est moindre en position passive. En position active du groupeur 14, la partie mobile 15 s'étend au moins partiellement entre le conditionneur 22 et le groupeur 14 selon la direction d'avance A. De cette manière, aucune retombée de produit ne peut se produire entre le groupeur 14 et le conditionneur 22 dans la position active du groupeur 14. De plus, le fait que la bande sans fin 34 ne s'étende pas jusqu'à l'arrière du groupeur 14 permet de limiter son étendue, réduisant le poids du dispositif 1, son encombrement, ainsi que sa complexité.

Dans la position active, le collecteur 4 et la barre 9 sont contigus, ce qui permet que le produit ne tombe pas au sol S entre eux. Tout le produit se retrouve alors sur l'andain 20 ou au-dessus du collecteur 4, évitant la retombée de produit sur le sol S. Le tapis végétal est ménagé et moins de pertes de produit peuvent se produire. Dans le mode de réalisation préféré de la figure 3, la partie fixe 17 du collecteur 4 et la barre 9 sont contiguës en position active et passive du groupeur 14. Dans ce mode de réalisation, la partie mobile 15 et la partie fixe 17 sont contiguës en position active du groupeur 14.

Dans le mode de réalisation préféré, la partie mobile 15 couvre, dans la position active, un secteur angulaire 31 d'au moins le huitième de la trajectoire T, vu selon l'axe de rotation 24. La partie fixe 17 s'étend sensiblement sur toute la largeur du conditionneur 22, parallèlement à l'axe de rotation 24, permettant qu'aucun produit ne tombe au sol S entre la barre 9 et la partie mobile 15, au moins en position active. Les parties mobile 15 et fixe 17 sont contiguës en position active. Dans le mode de réalisation préférée, le secteur angulaire couvert par la partie fixe 17 est sensiblement égal au secteur angulaire 31 couvert par la partie mobile 15, à savoir légèrement supérieur à un huitième de la trajectoire T vu selon l'axe de rotation 24. Une autre répartition entre le secteur angulaire couvert par la partie fixe 17 et le secteur angulaire 31 couvert par la partie mobile 15 est cependant possible.

La partie fixe 17 est de préférence réalisée par une tôle métallique. Elle s'étend sensiblement horizontalement, ou parallèlement au plan de coupe C. Dans ce mode de réalisation préféré, la partie mobile 15 s'étend sensiblement verticalement, ou légèrement inclinée vers l'arrière. Grâce à la fixation de la partie mobile 15 du collecteur 4 sur le groupeur 14, il est possible d'accéder facilement à la partie fixe 17 dans la position passive, respectivement à la surface supérieure 16, ce, sans que la partie mobile 15 ne perturbe le flux de produit provenant du conditionneur 22, même avec un pivotement du groupeur 14 inférieur à 100°.

Ainsi qu'il ressort de la figure 2, le collecteur 4, respectivement sa surface supérieure 16, présente une forme sensiblement en arc de cercle centré sur l'axe de rotation 24 du tambour 23. Selon le mode de réalisation préféré, afin d'éviter des projections de pierres ou de débris vers l'arrière du dispositif 1 en position passive du groupeur 14, l'extrémité arrière de la partie fixe 17 est située sous le tambour 23, et présente, vu selon l'axe de rotation 24, une surface supérieure formant un angle moins important avec la verticale qu'une tangente à la trajectoire T du tambour 23 au point le plus proche de la trajectoire T. Grâce à cette orientation de l'extrémité arrière de la partie fixe 17, les pierres et débris qui proviennent des rotors 10 sont éjectés vers le haut plutôt que vers l'arrière, réduisant avantageusement la dangerosité de la machine M.

De préférence, le collecteur 4, respectivement la partie mobile 15, s'étend verticalement sensiblement jusqu'à hauteur du groupeur 14 dans sa position active. Autrement dit, l'extrémité haute du collecteur 4, respectivement de la partie mobile 15, est plus basse que l'extrémité haute du groupeur 14 en position active. Le groupeur 14, respectivement la bande sans fin 34 et son moyen d'entrainement sont ainsi protégés d'intrusion de produit ou autres débris. Dans le cas d'un groupeur 14 à bande sans fin 34, le collecteur 4, respectivement la partie mobile 15, s'étend très légèrement au-dessus de l'avant de la face supérieure de la bande sans fin 34. De préférence, l'extrémité haute du collecteur 4, respectivement de la partie mobile 15, est sensiblement à la même hauteur que l'axe de rotation 24 du conditionneur 22, autorisant ainsi au conditionneur 22 de transférer du produit au groupeur 14. Tel qu'il est visible sur les figures 2 et 3, au moins les trois quarts de la surface supérieure 16 sont situés sous le conditionneur 22. Plus précisément, au moins les trois quarts de la surface supérieure 16 sont situés en dessous de l'axe de rotation 24.

L'actionneur d'escamotage 19 permet de faire pivoter le groupeur 14 conjointement à la partie mobile 15 entre ses positions active et passive, d'au moins 60°, de préférence d'au moins 75°, et plus préférentiellement encore d'au moins 90°. Plus le pivotement du groupeur 14 est important, plus l'accès au collecteur 4 est facilité.

Afin de déplacer le produit, le groupeur 14 comprend au moins un rouleau 18 entrainé autour d'un axe d'animation sensiblement horizontal et/ou parallèle au sol S, au moins dans la position active. Tel que représenté sur les figures, l'axe d'animation du rouleau 18 est sensiblement parallèle à la direction d'avance A, et/ou au plan central PC dans la position active. Dans les mode et variante représentés, le groupeur 14 comprend une bande 34 sans fin. Cette bande 34 est entrainée par le rouleau 18. Elle est en outre tendue par un deuxième rouleau d'axe parallèle à l'axe d'animation du premier rouleau 18. Le produit repose sur la bande 34 lors de son déplacement transversal à la direction d'avance A. Le produit ne peut donc pas traverser la bande 34. Pour cela, elle peut être en caoutchouc ou matière plastique, ce qui la rend légère et nécessite peu d'énergie pour son entrainement. De plus, elle ne présente généralement aucune ouverture de sorte à empêcher les pertes de produit par le dessous.

Le groupeur 14, respectivement la bande 34 sans fin, s'étend selon l'axe de rotation 24 sur au moins 65% de la largeur du conditionneur 22. De préférence, le groupeur 14, respectivement la bande 34 sans fin, s'étend selon l'axe de rotation 24 sur au moins 75% et plus préférentiellement encore au moins 85% de la largeur du conditionneur 22. De telles proportionnalités de dimension permettent avantageusement de déplacer la totalité du fourrage entrainé par le conditionneur 22 tout en réduisant la largeur du groupeur 14, et donc son poids. Le groupeur 14 comprend également un cadre 13 reliant le rouleau 18 avec la barre 9, respectivement avec le châssis 30. Préférentiellement, le collecteur 4, ou au moins la partie mobile 15, est fixé(e) avec le groupeur 14 par le cadre 13.

Ainsi qu'il est visible sur la figure 3, la partie mobile 15 est orientée, dans la position passive, de manière à ce que le produit et/ou les débris y étant accumulé puisse tomber par gravité, et préférentiellement face supérieure 16 au sol S. Avantageusement, le nettoyage de la partie mobile 15 se limite à une transposition du groupeur 14 entre ses position active et passive, préférentiellement simplement en actionnant l'actionneur d'escamotage 19.

Dans la position active, l'au moins un rouleau 18 du groupeur 14 est entrainé en rotation, préférentiellement par un moteur auxiliaire 25. Dans la position passive, le groupeur 14 n'agissant pas sur le produit, il n'est pas entrainé en rotation, nécessitant avantageusement moins de puissance. La source d'énergie, qu'elle soit hydraulique ou électrique, provient préférentiellement du tracteur 2. Avantageusement, lorsque le groupeur 14 est transposé en position passive, le moteur auxiliaire 25 est automatiquement arrêté, par exemple par une vanne d'arrêt ou un interrupteur.

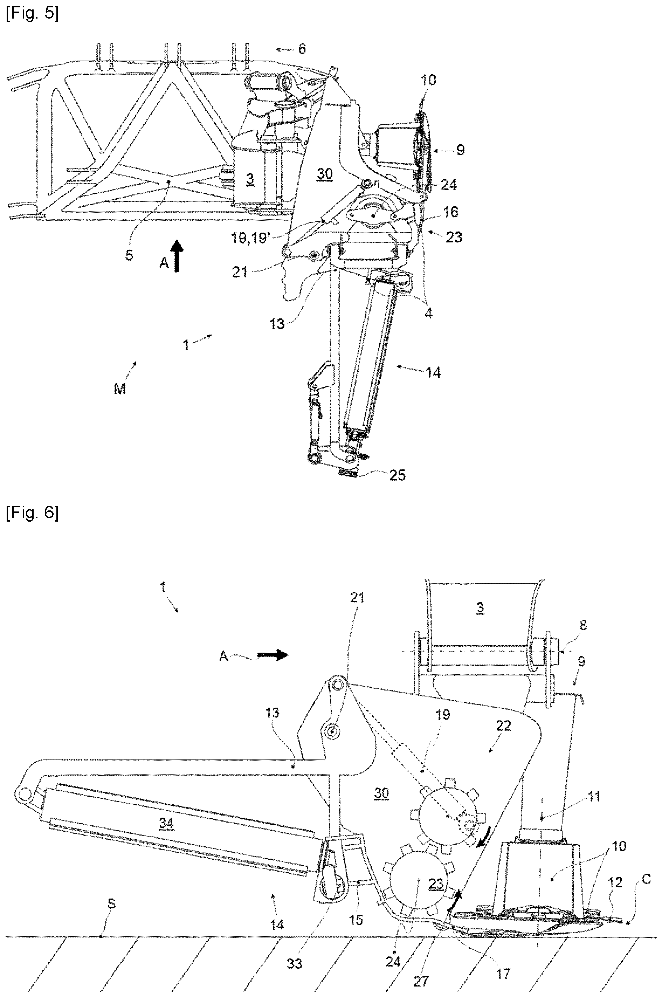

Afin de réduire l'encombrement perpendiculairement à la direction d'avance A et parallèlement au sol S, le dispositif 1 peut être transposé entre une configuration travail, représentée sur les figures 1 à 4, et une configuration transport, représentée sur la figure 5. Dans la configuration travail, le dispositif 1 est en appui sur le sol S, au moins partiellement. Dans la configuration transport, il est plus éloigné du sol S. Dans la configuration transport, le dispositif 1 s'étend préférentiellement sensiblement verticalement. Dans cette configuration, l'axe de rotation 24 est sensiblement parallèle au plan central PC. Pour la transposition entre configurations travail et transport, dans le cas d'une machine M, la poutre 3 est articulée avec le bâti 5, de préférence autour d'une articulation d'axe de pliage 7 parallèle à la direction d'avance A. La poutre 3 peut être articulée avec le dispositif 1, au moins autour d'un axe de suivi 8 parallèle à l'axe de pliage 7.

Le collecteur 4, respectivement les parties mobile 15 et fixe 17, ne présente(nt) de préférence aucune ouverture pouvant laisser passer du produit. Cependant, les rotors 10 projettent généralement le produit vers l'arrière à une distance telle de la barre 9 qu'il est possible de reculer l'extrémité frontale du collecteur de sorte qu'elle soit légèrement derrière la barre 9, ainsi qu'il est représenté sur la figure 2. Alternativement, le collecteur 4 pourrait comporter de petites ouvertures ne laissant pas passer de produit sous forme de tige telle que de l'herbe. Le collecteur 4 pourrait notamment être une tôle percée.

Afin de pouvoir faucher le produit sans le grouper, il est prévu que le groupeur 14 soit démontable du dispositif 1, préférentiellement avec le cadre 13, par exemple à l'aide de vis. Lorsque le groupeur 14 est démonté, la partie mobile 15 du collecteur 4 est également démontée du dispositif 1, limitant son poids et son encombrement.

Afin de faire varier la largeur de l'andain 20 déposé par le groupeur 14 dans la position active, un actionneur longitudinal 33 est agencé de manière à déplacer le groupeur 14 transversalement, et préférentiellement orthogonalement, à la direction d'avance A par rapport au conditionneur 22. Tel qu'il ressort des figures 2 à 4, le collecteur 4 s'étend devant et au-dessus de l'actionneur longitudinal 33 dans la position active, de manière à protéger ce dernier, et particulièrement de manière à éviter que du produit et/ou des débris ne s'y accumule, ce qui pourrait entraver le fonctionnement et la durée de vie de l'actionneur longitudinal 33.

Tel qu'il ressort de la figure 1 notamment, la machine M peut comporter un seul dispositif 1. Il ressort également de la figure 1 que la forme du bâti 5 de la machine M est prévu pour pouvoir supporter un dispositif supplémentaire, préférentiellement identique au dispositif 1, et préférentiellement symétrique à ce dernier par rapport au plan central PC. Dans la configuration transport du dispositif 1, le groupeur 14 est en position active, permettant avantageusement de réduire la largeur du dispositif 1, respectivement de la machine M.

Tel qu'il ressort des figures 2 à 4, la partie mobile 15 est située partiellement derrière et partiellement sous le conditionneur 22 en position active du groupeur 14, permettant d'offrir un meilleur accès au collecteur 4, respectivement à la surface supérieure 16 ainsi qu'un passage facilité du produit en position passive du groupeur 14. Dans une variante non représentée, la partie mobile 15 est située uniquement derrière le conditionneur 22 en position active du groupeur 14.

Selon une caractéristique importante, un procédé permet d'accéder entre le conditionneur 22 et le groupeur 14 appartenant au dispositif 1, ce dispositif 1 pouvant être déplacé dans une direction d'avance A et comportant également une barre 9 de coupe munie d'organes de coupe destinés à couper un produit végétal sur pied, le conditionneur 22 étant disposé derrière la barre 9, et le groupeur 14 étant destiné à déplacer le produit transversalement à la direction d'avance A, ce groupeur 14 pouvant être transposé entre une position active et une position passive, le procédé étant caractérisé par le fait qu'au moins une partie mobile 15 d'un collecteur 4 est fixée au groupeur 14 et est située partiellement sous et partiellement derrière le conditionneur 22 dans la position active, et par le fait que le groupeur 14 est transposé par l'actionneur d'escamotage 19 entre les positions active et passive. De cette manière, la transposition du groupeur 14 entre positions active et passive permet avantageusement que la partie mobile 15 passe de la position active dans laquelle elle est proche du collecteur 22 à la position passive dans laquelle elle est plus éloignée du conditionneur 22. Cette transposition permet ainsi d'accéder facilement entre le conditionneur 22 et le groupeur 14. Préférentiellement, cette transposition permet d'accéder directement au collecteur 4, c'est-à-dire sans passer par la barre 9 ou le groupeur 4.

Dans un autre mode de réalisation représenté sur la figure 6, le conditionneur 22 comporte un tambour secondaire entrainé en rotation autour d'un axe sensiblement parallèle à l'axe de rotation 24. Le tambour secondaire est alors situé au dessus du tambour 23. Le tambour 23 et le tambour secondaire tournent en sens inverses afin d'entrainer le produit entre eux. Les tambours comportent des moyens de conditionnement interpénétrant de type nervures. Ces nervures peuvent notamment être longitudinales ou hélicoïdales.

Dans un autre mode de réalisation non représenté, le groupeur 14, respectivement le rouleau 18, comprend une vis sans fin et son axe d'animation est sensiblement perpendiculaire à la direction d'avance A. Le produit est alors déplacé au moins partiellement sous l'axe d'animation du rouleau 18, qui dans ce cas est sensiblement parallèle à l'axe de rotation 24. Le collecteur 4 s'étend alors jusqu'à l'arrière du groupeur 14, permettant ainsi d'empêcher la chute de produit sur le sol S depuis l'arrière de la barre 9 jusqu'à l'arrière du groupeur 14. Enfin, dans un autre mode de réalisation non représenté, le groupeur 14 est réalisé par le rouleau 18 à côté duquel sont entrainés en rotation une pluralité de rouleaux secondaires d'axes parallèles à l'axe d'animation du rouleau 18.

Dans un autre mode de réalisation non représenté, le groupeur 14 est relié au châssis 30 par un mécanisme à quatre barres, l'actionneur d'escamotage 19 faisant alors translater le groupeur 14 par rapport à la barre 9.

La barre 9, le groupeur 14 et le conditionneur 22 peuvent être entrainés par une même source d'énergie, et notamment par la prise de force du tracteur 2. Toutefois, un seul ou chacun peut également être entrainé séparément par un ou des moteurs auxiliaires. L'actionneur d'escamotage 19 pourrait également être réalisé par un vérin pneumatique, et/ou un moteur hydraulique ou électrique, également commandé à distance.

Le dispositif 1 et la machine M qui viennent d'être décrits ne sont que des exemples de réalisation qui ne saurait limiter le domaine de protection défini par les revendications suivantes.

## Revendications

1. Dispositif (1) agricole pouvant être déplacé dans une direction d'avance (A) et comportant une barre (9) de coupe munie d'organes de coupe destinés à couper un produit végétal sur pied, un conditionneur (22) disposé derrière la barre (9), et un groupeur (14) destiné à déplacer le produit transversalement à la direction d'avance (A) et situé, dans une position active, derrière la barre (9), un actionneur d'escamotage (19) étant configuré pour transposer le groupeur (14) entre la position active et une position passive dans laquelle le produit est déposé à l'arrière du dispositif (1), le dispositif (1) comportant un collecteur (4) qui s'étend, en position active du groupeur (14), partiellement sous et partiellement derrière le conditionneur (22), le collecteur comprenant une partie mobile (15), ladite partie mobile (15) du collecteur (4) étant fixée sur ledit groupeur (14)
le dispositif agricole (1) étant **caractérisé en ce que,** dans la position active, le collecteur (4) et la barre (9) sont contigus.

2. Dispositif agricole selon la revendication 1, **caractérisé en ce que** le collecteur (4) comporte une partie fixe (17) fixée avec la barre (9) et située au moins partiellement sous le conditionneur (22).

3. Dispositif agricole selon la revendication 1 ou 2, **caractérisé en ce que** le conditionneur (22) comporte un tambour (23) entrainé en rotation autour d'un axe de rotation (24) formant une trajectoire (T), et **en ce que** la partie mobile (15) couvre, dans la position active, un secteur angulaire (31) d'au moins le quart de la trajectoire (T), vu selon l'axe de rotation (24).

4. Dispositif agricole selon la revendication 3, **caractérisé en ce que** la partie mobile (15) couvre, dans la position active, un secteur angulaire (31) d'au moins le huitième de la trajectoire (T) du tambour (23), vu selon l'axe de rotation (24).

5. Dispositif agricole selon l'une des revendications 1 à 4, **caractérisé en ce que** le groupeur (14) peut être transposé par un actionneur d'escamotage (19) entre ses positions active et passive par pivotement autour d'un axe d'escamotage (21) transversal à la direction d'avance (A).

6. Dispositif agricole selon l'une quelconque des revendications 1 à 5, **caractérisé en ce que** l'actionneur d'escamotage (19) permet de faire pivoter le groupeur (14) conjointement à la partie mobile (15) d'au moins 60°, de préférence d'au moins 75°, et plus préférentiellement encore d'au moins 90°.

7. Dispositif agricole selon l'une des revendications 1 à 6, **caractérisé en ce que**, dans la position passive, la partie mobile (15) est orientée de manière à ce que le produit y étant accumulé puisse tomber par gravité.

8. Dispositif agricole selon l'une des revendications 1 à 7, **caractérisé en ce que** la partie mobile (15) est située partiellement derrière et partiellement sous le conditionneur (22) en position active du groupeur (14).

9. Dispositif agricole selon l'une des revendications 4 et 5, **caractérisé en ce que**, dans la position active, la distance entre le collecteur (4) et la trajectoire (T) est inférieure à 15%, de préférence inférieure à 10%, et plus préférentiellement encore inférieure à 7% du rayon de la trajectoire (T), en vue selon l'axe de rotation 24.

10. Dispositif agricole selon l'une des revendications 3 à 9 tant que celle-ci se réfère à la revendication 3, **caractérisé en ce que** l'extrémité arrière de la partie fixe (17) est située sous le tambour (23) et présente, vu selon l'axe de rotation (24), une surface supérieure formant un angle moins important avec la verticale qu'une tangente à la trajectoire (T) du tambour (23) au point le plus proche de la trajectoire (T).

11. Dispositif agricole selon l'une des revendications 3 à 10, **caractérisé en ce que** le groupeur (14) comprend une bande (34) sans fin entrainée par un rouleau (18).

12. Dispositif agricole selon l'une des revendications 2 à 11, **caractérisé en ce que** la partie mobile (15) s'étend, selon la direction d'avance (A) et en position active du groupeur (14), au moins partiellement entre la partie fixe (17) et le groupeur (14).

13. Machine (M) agricole **caractérisée en ce qu'**elle comporte au moins un dispositif (1) selon l'une des revendications 1 à 10.

14. Procédé pour accéder entre un conditionneur (22) et un groupeur (14) appartenant à un dispositif (1) agricole selon l'une des revendications 1 à 13, le dispositif (1) pouvant être déplacé dans une direction d'avance (A) et comportant une barre (9) de coupe munie d'organes de coupe destinés à couper un produit végétal sur pied, le conditionneur (22) étant disposé derrière la barre (9), et le groupeur (14) étant destiné à déplacer le produit transversalement à la direction d'avance (A), le groupeur (14) pouvant être transposé entre une position active et une position passive, procédé dans lequel au moins une partie mobile (15) d'un collecteur (4) est fixée au groupeur (14) et est située partiellement sous et partiellement derrière le conditionneur (22) dans la position active, et le groupeur (14) est transposé par l'actionneur d'escamotage (19) entre les positions active et passive.

## Patentansprüche

1. Landwirtschaftliche Vorrichtung (1), die in einer Vorschubrichtung (A) bewegbar ist und einen Mähbalken (9) mit Mähelementen zum Schneiden eines stehenden Pflanzenprodukts, einen hinter dem Balken (9) angeordneten Aufbereiter (22) und eine Gruppiervorrichtung (14) umfasst, die dazu bestimmt ist, das Produkt quer zur Vorschubrichtung (A) zu bewegen, und die sich in einer aktiven Position hinter dem Balken (9) befindet, wobei ein Einklapp-Aktuator (19) so konfiguriert ist, dass es die Gruppiervorrichtung (14) zwischen der aktiven Position und einer passiven Position, in der das Produkt an der Rückseite der Vorrichtung (1) abgelegt wird, umsetzt, wobei die Vorrichtung (1) einen Sammler (4) umfasst, der sich in der aktiven Position des Gruppiervorrichtungs (14) teilweise unter und teilweise hinter dem Aufbereiter (22) erstreckt, wobei der Sammler einen beweglichen Teil (15) umfasst, der an der Gruppiervorrichtung (14) befestigt ist, wobei die landwirtschaftliche Vorrichtung (1) **dadurch gekennzeichnet ist, dass** in der aktiven Position der Sammler (4) und der Balken (9) aneinander angrenzen.

2. Landwirtschaftliche Vorrichtung nach Anspruch 1, **dadurch gekennzeichnet, dass** der Sammler (4) einen festen Teil (17) umfasst, der mit dem Balken (9) befestigt ist und sich zumindest teilweise unter dem Aufbereiter (22) befindet.

3. Landwirtschaftliche Vorrichtung nach Anspruch 1 oder 2, **dadurch gekennzeichnet, dass** der Aufbereiter (22) eine Trommel (23) umfasst, die um eine Drehachse (24) in Drehung versetzt wird, so dass sie eine Bahn (T) bildet, und dass der bewegliche Teil (15) in der aktiven Position einen Winkelsektor (31) von mindestens einem Viertel der Bahn (T), gesehen entlang der Drehachse (24), abdeckt.

4. Landwirtschaftliche Vorrichtung nach Anspruch 3, **dadurch gekennzeichnet, dass** der bewegliche Teil (15) in der aktiven Position einen Winkelsektor (31) von mindestens einem Achtel der Bahn (T) der Trommel (23), gesehen entlang der Drehachse (24), abdeckt.

5. Landwirtschaftliche Vorrichtung nach einem der Ansprüche 1 bis 4, **dadurch gekennzeichnet, dass** die Gruppiervorrichtung (14) durch einen Einklapp-Aktuator (19) zwischen ihrer aktiven und passiven Position durch Schwenken um eine quer zur Vorschubrichtung (A) verlaufende Einklappachse (21) umgesetzt werden kann.

6. Landwirtschaftliche Vorrichtung nach einem der Ansprüche 1 bis 5, **dadurch gekennzeichnet, dass** der Einklapp-Aktuator (19) es ermöglicht, die Gruppiervorrichtung (14) gemeinsam mit dem beweglichen Teil (15) um mindestens 60°, vorzugsweise um mindestens 75° und noch bevorzugter um mindestens 90° zu schwenken.

7. Landwirtschaftliche Vorrichtung nach einem der Ansprüche 1 bis 6, **dadurch gekennzeichnet, dass** der bewegliche Teil (15) in der passiven Position so ausgerichtet ist, dass das dort angesammelte Produkt durch Schwerkraft fallen kann.

8. Landwirtschaftliche Vorrichtung nach einem der Ansprüche 1 bis 7, **dadurch gekennzeichnet, dass** sich der bewegliche Teil (15) in der aktiven Position des Gruppiervorrichtungs (14) teilweise hinter und teilweise unter dem Aufbereiter (22) befindet.

9. Landwirtschaftliche Vorrichtung nach einem der Ansprüche 4 und 5, **dadurch gekennzeichnet, dass** in der aktiven Position der Abstand zwischen dem Sammler (4) und der Bahn (T) weniger als 15%, vorzugsweise weniger als 10% und noch bevorzugter weniger als 7% des Radius der Bahn (T) ist, gesehen entlang der Drehachse 24.

10. Landwirtschaftliche Vorrichtung nach einem der Ansprüche 3 bis 9, solange sich dieser auf Anspruch 3 bezieht, **dadurch gekennzeichnet, dass** das hintere Ende des festen Teils (17) unter der Trommel (23) liegt und, entlang der Drehachse (24) gesehen, eine obere Fläche aufweist, die mit der Vertikalen einen kleineren Winkel bildet als eine Tangente an die Bahn (T) der Trommel (23) an dem am nächsten an der Bahn (T) liegenden Punkt.

11. Landwirtschaftliche Vorrichtung nach einem der Ansprüche 3 bis 10, **dadurch gekennzeichnet, dass** die Gruppiervorrichtung (14) ein endloses Förderband (34) umfasst, das von einer Walze (18) angetrieben wird.

12. Landwirtschaftliche Vorrichtung nach einem der Ansprüche 2 bis 11, **dadurch gekennzeichnet, dass** sich der bewegliche Teil (15) entlang der Vorschubrichtung (A) und in der aktiven Position des Gruppiervorrichtungs (14) zumindest teilweise zwischen dem festen Teil (17) und der Gruppiervorrichtung (14) erstreckt.

13. Landwirtschaftliche Maschine (M), **dadurch gekennzeichnet, dass** sie mindestens eine Vorrichtung (1) nach einem der Ansprüche 1 bis 10 umfasst.

14. Verfahren zum Zugriff zwischen einem Aufbereiter (22) und einer Gruppiervorrichtung (14), die zu einer landwirtschaftlichen Vorrichtung (1) nach einem der Ansprüche 1 bis 13 gehören, wobei die Vorrichtung (1) in einer Vorschubrichtung (A) bewegt werden kann und einen Mähbalken (9) mit Mähelementen zum Abschneiden eines stehenden Pflanzenprodukts umfasst, wobei der Aufbereiter (22) hinter dem Balken (9) angeordnet ist und die Gruppiervorrichtung (14) dazu bestimmt ist, das Produkt quer zur Vorschubrichtung (A) zu bewegen, wobei die Gruppiervorrichtung (14) zwischen einer aktiven und einer passiven Position umgesetzt werden kann, wobei in dem Verfahren mindestens ein beweglicher Teil (15) eines Sammlers (4) an der Gruppiervorrichtung (14) befestigt ist und sich in der aktiven Position teilweise unter und teilweise hinter dem Aufbereiter (22) befindet, und die Gruppiervorrichtung (14) durch den Einklapp-Aktuator (19) zwischen der aktiven und der passiven Position umgesetzt wird.

## Claims

1. Agricultural device (1) that can be moved in a direction of advance (A) and including a cutter bar (9) equipped with cutting elements intended to cut a standing crop product, a conditioner (22) positioned behind the bar (9), and a grouping unit (14) intended to move the product transversely to the direction of advance (A) and located, in an active position, behind the bar (9), a retraction actuator (19) being configured to transpose the grouping unit (14) between the active position and a passive position in which the product is deposited at the rear of the device (1), wherein the device (1) comprises a collecting mechanism (4) which extends, in active position of the grouping unit (14), partially under and partially behind the conditioner (22), and wherein a movable part (15) of the collecting mechanism (4) is fastened to the grouping unit (14), wherein the agricultural device (1) is **characterised in that**, in the active position, the collecting mechanism (4) and the bar (9) are adjacent to each other.

2. The agricultural device according to claim 1, wherein the collecting mechanism (4) comprises a fixed part (17) fastened with the bar (9) and located at least partially under the conditioner (22).

3. The agricultural device according to claim 1 or 2, wherein the conditioner (22) comprises a drum (23) driven in rotation around a rotation axis (24) forming a path (T), and wherein the movable part (15) covers, in the active position, an angular sector (31) of at least a quarter of the path (T), viewed along the rotation axis (24).

4. The agricultural device according to claim 3, wherein the movable part (15) covers, in the active position, an angular sector (31) of at least one eighth of the path (T) of the drum (23), viewed along the rotation axis (24).

5. The agricultural device according to one of claims 1 to 4, wherein the grouping unit (14) can be transposed by a retraction actuator (19) between its active and passive positions by pivoting around a retraction axis (21) transverse to the direction of advance (A).

6. The agricultural device according to any one of claims 1 to 5, wherein the retraction actuator (19) allows the grouping unit (14) to be pivoted together with the movable part (15) by at least 60°, preferably by at least 75°, and even more preferably by at least 90°.

7. The agricultural device according to one of claims 1 to 6, wherein, in the passive position, the movable part (15) is oriented in such a way that the product accumulated therein can fall through gravity.

8. The agricultural device according to one of claims 1 to 7, wherein the movable part (15) is located partially behind and partially under the conditioner (22) in active position of the grouping unit (14).

9. The agricultural device according to one of claims 4 and 5, wherein in the active position, the distance between the collecting mechanism (4) and the path (T) is less than 15%, preferably less than 10%, and even more preferably less than 7% of the radius of the path (T), viewed along the rotation axis.

10. The agricultural device according to one of claims 3 to 9 as long as it refers to claim 3, wherein the rear end of the fixed part (17) is located under the drum (23) and has, viewed along the rotation axis (24), an upper surface forming a smaller angle with the vertical than a tangent to the path (T) of the drum (23) at the point closest to the path (T).

11. The agricultural device according to one of claims 3 to 10, wherein the grouping unit (14) comprises an endless belt (34) driven by a roller (18).

12. The agricultural device according to one of claims 2 to 11, wherein the movable part (15) extends, according to the direction of advance (A) and in active position of the grouping unit (14), at least partially between the fixed part (17) and the grouping unit (14).

13. An agricultural machine (M) which includes at least one device (1) according to one of claims 1 to 10.

14. A method providing access between a conditioner (22) and a grouping unit (14) belonging to an agricultural device (1) according to one of claims 1 to 13, the device (1) being movable in a direction of advance (A) and including a cutter bar (9) equipped with cutting elements intended to cut a standing crop product, the conditioner (22) being positioned behind the bar (9), and the grouping unit (14) being intended to move the crop transversely to the direction of advance (A), the grouping unit being (14) transposable between an active position and a passive position, method wherein at least one movable part (15) of a collecting mechanism (4) is fastened to the grouping unit (14) and is located partially under and partially behind the conditioner (22) in the active position, and the grouping unit (14) is transposed by the retraction actuator (19) between the active and passive positions.
